(19) Europäisches Patentamt
European Patent Office
Office européen des brevets

(11) **EP 2 075 865 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(51) Int Cl.:
**H01M 8/04** *(2006.01)*      **H01M 10/48** *(2006.01)*
**H01M 10/42** *(2006.01)*

(21) Anmeldenummer: **08020681.6**

(22) Anmeldetag: **28.11.2008**

(54) **Defektkontrolle für ein oder mehrere elektrische Betriebselemente**

Defect control for one or more electrical operating elements

Contrôle de défauts pour un ou plusieurs éléments de fonctionnement électriques

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.12.2007 DE 102007061642**

(43) Veröffentlichungstag der Anmeldung:
**01.07.2009 Patentblatt 2009/27**

(73) Patentinhaber:
• **Forschungszentrum Jülich GmbH 52425 Jülich (DE)**
• **Fachhochschule Aachen 52066 Aachen (DE)**

(72) Erfinder:
• **Lustfeld, Hans. Dr. 52428 Jülich, (DE)**
• **Reissel, Marten, Prof. Dr. 52457 Aldenhoven, (DE)**
• **Steffe, Bernhard, Dr. 52382 Niederzier, (DE)**

(56) Entgegenhaltungen:
EP-A- 1 713 140          DE-A1- 10 010 985
DE-A1-102006 035 741     DE-U1- 20 122 043

**Beschreibung**

Die Erfindung betrifft eine Defektkontrolle für ein oder mehrere elektrische Betriebselemente.

Stand der Technik

Viele elektrische Systeme, wie beispielsweise Brennstoffzellenstapel, bestehen aus einer Stapelung elektrischer Betriebselemente, die in Reihe geschaltet sind. Zeigt das Gesamtsystem eine Funktionsstörung, ist nicht unmittelbar ersichtlich, welches der vielen Betriebselemente einen Fehler aufweist. Selbst wenn das fehlerhafte Betriebselement identifiziert ist, bleibt die Frage offen, wo in diesem Betriebselement der Fehler lokalisiert ist.

Aus (R. Kress, L. Kuhn, R. Potthast, "Reconstruction of a current distribution from its magnetic field", Inverse Problems 18, 1127 (2002)) ist eine Methode zur Diagnostik eines elektrischen Systems bekannt, bei der das durch die inneren Ströme des Systems erzeugte Magnetfeld gemessen wird, um durch tomographische Verfahren auf die Stromverteilung im Inneren des Systems rückschließen zu können. Nachteilig gelingt es bei einer Stapelung vieler Betriebselemente mit dieser Methode nicht, das genaue Betriebselement zu ermitteln, das für die Funktionsstörung verantwortlich ist. Erst recht ist es nicht möglich, den genauen Ort innerhalb des fehlerhaften Betriebselements zu ermitteln, an dem der Fehler lokalisiert ist.

Es ist allgemein bekannt, Spannungsänderungen zwischen einzelnen Betriebselementen zu messen. Nachteilig führt dies bei einer Stapelung vieler elektrischer Betriebselemente zu einem hohen Aufwand für Verkabelung und Messwertaufnahme. Aus der DE 201 22 043 U1 ist eine kompakte unterbrechungsfreie Stromversorgung (USV) mit Batterien als Betriebselementen bekannt, in der jeweils ein Pol einer jeden Batterie im Batteriestapel an ein Testelement angrenzt. Jeweils zwei Testelemente sind durch eine elektrisch leitende Messstrecke, die eine Spannungsmessschaltung enthält, miteinander verbunden. Über eine Spannungsmess-Auswahlschaltung mit einem zentralen Controller kann mit deutlich geringerem apparativem Aufwand als bei bisherigen Anordnungen jede einzelne Batterie daraufhin überwacht werden, ob sie die richtige Spannung liefert. Es ist aber nachteilig immer noch nicht möglich, den genauen Ort innerhalb der fehlerhaften Batterie zu ermitteln, an dem der Fehler lokalisiert ist.

Aus (D. J. L. Brett et al., "Measurement of the current distribution along a single flow channel of a solid polymer fuel cell", Electrochemistry Communications 3, 628 (2001)) ist es bekannt, eine an ein Betriebselement angrenzende Untersuchungsschicht einzubringen, die vielfach in voneinander isolierte quadratische Teilzellen segmentiert ist. Diese Untersuchungsschicht muss vergleichsweise dick sein, um mit der Außenwelt verkabelt werden zu können. Alternativ lehrt etwa (J. Stumper et al., "In-situ methods for the determination of current distributions in PEM fuel cells", Electrochimica Acta 43, 3773 (1998)), das Betriebselement selbst in Teilzellen zu segmentieren, was die Leistung des Betriebselements mindert.

Beiden Lösungen ist gemein, dass die Teilzellen voneinander isoliert sind und einzeln über feine Drähte mit einer Elektronik verbunden sind, die Spannungsänderungen an jeder Teilzelle oder auch die Stärke des durch jede Teilzelle hindurch tretenden Stroms zu registrieren vermag. Damit kann sowohl ein einzelnes elektrisches Betriebselement untersucht werden als auch ein elektrisches Betriebselement, das Teil einer Stapelung ist. Nachteilig ist diese Methode auf Grund des nochmals erhöhten Verkabelungs- und Elektronikaufwands schon für ein einziges Betriebselement noch kostspieliger. Deshalb ist die Segmentierung in Teilzellen erst recht für Brennstoffzellenstapel, die eine Vielzahl von Einzelzellen enthalten, nicht praktikabel. Zudem sind die feinsten Drähte schlecht gegen Störungen abschirmbar.

Aufgabe und Lösung

Es ist daher die Aufgabe der Erfindung, in einem elektrischen Betriebselement oder einer Stapelung elektrischer Betriebselemente die Erkennung von Defekten gegenüber dem Stand der Technik zu vereinfachen sowie in einer Stapelung elektrischer Betriebselemente eine genauere Fehlerdiagnose zu ermöglichen.

Diese Aufgabe wird erfindungsgemäß gelöst durch eine Vorrichtung gemäß Hauptanspruch, durch ein Herstellungsverfahren gemäß Nebenanspruch sowie durch ein Verfahren zum Betreiben gemäß weiterem Nebenanspruch. Weitere vorteilhafte Ausgestaltungen ergeben sich aus den darauf rückbezogenen Unteransprüchen.

Gegenstand der Erfindung

Im Rahmen der Erfindung wurde eine Vorrichtung entwickelt, die ein elektrisches Betriebselement oder eine Stapelung mindestens zweier elektrischer Betriebselemente umfasst. Erfindungsgemäß grenzt mindestens ein Testelement an mindestens ein Betriebselement an, oder es ist ein Teil dieses Betriebselements, wobei das Oder nichtausschließlich ist. Das Testelement kann insbesondere zwischen den Betriebselementen einer Stapelung angeordnet sein. Das Testelement weist mindestens zwei voneinander beabstandete elektrisch leitende Bereiche auf, welche über eine elektrisch leitende Messstrecke miteinander verbunden sind.

Der Begriff der Stapelung ist nicht auf eine Stapelung ebener fester Körper beschränkt, sondern umfasst Schichtungen beliebiger Betriebselemente. Die Betriebselemente können beispielsweise Funktionsschichten sein, die nacheinander auf ein beliebig geformtes Substrat aufgebracht wurden. Auch das Testelement kann als eine solche Funktionsschicht realisiert sein.

Der Begriff des elektrischen Betriebselements umfasst neben passiven, aus elektrisch leitenden oder halbleitenden Materialien gefertigten Bauteilen ausdrücklich auch elektrisch aktive Bauteile wie Batterien oder Brennstoffzellen, die erst bei bestimmungsgemäßem Gebrauch von einem Strom durchsetzt werden. Der Elektrolyt in einer Brennstoffzelle etwa transportiert einen elektrischen Strom nur in Form von Ionen der Betriebsmittel, so dass die Brennstoffzelle ohne Betriebsmittel elektrisch isoliert.

Unter einem Testelement, das Teil des Betriebselements ist, ist insbesondere ein Bereich einer elektrisch leitenden Grenzfläche des Betriebselements zu verstehen, der durch das nachträgliche Einbringen von Beabstandungen, wie beispielsweise Schlitzen, in elektrisch leitende Bereiche aufgeteilt wurde. Ein solchermaßen ausgestaltetes Testelement hat den Vorteil, dass es keinen zusätzlichen Einbauraum benötigt.

Beispielsweise können in einem Brennstoffzellenstapel, der Brennstoffzellen als Betriebselemente enthält, metallische Platten, die eine einzelne Brennstoffzelle begrenzen, durch das Einbringen von Beabstandungen, wie etwa Schlitzen, zusätzlich als Testelemente ausgebildet sein. Dann wird die zusätzliche Funktionalität dieser Platten als Testelemente nicht mit einer Vergrößerung des Bauvolumens erkauft. Das Bauvolumen ist entscheidend für die Leistungsdichte des Brennstoffzellenstapels. Zusätzliche Testelemente zwischen je zwei Einzelzellen, die das Bauvolumen erhöhen, würden die Leistungsdichte senken.

Sofern die Platten, die eine Brennstoffzelle begrenzen, auch deren Gasdichtigkeit sicherstellen, müssen die Beabstandungen (Schlitze) elektrisch isolierend und gasdicht verschlossen werden.

Der Begriff des Testelements, das Teil des Betriebselements ist, umfasst aber auch beispielsweise ein zunächst separat gefertigtes Testelement, das später dauerhaft, etwa durch Schweißen oder Löten, mit dem Betriebselement verbunden wurde. Eine dauerhafte Verbindung ist insbesondere dann gegeben, wenn das Testelement nicht mehr entfernt werden kann, ohne dass das Betriebselement funktionsunfähig wird.

Ist das Testelement Teil des Betriebselements, so geht es in dieses über. In der Richtung des Nennstroms betrachtet, der im fehlerfreien Betrieb durch das Betriebselement fließt, findet dieser Übergang dort statt, wo die Beabstandung zwischen den elektrischen Bereichen auf hört. Hat etwa das Betriebselement durch das Einbringen von Schlitzen zusätzlich die Funktion als Testelement erhalten, geht das Testelement am Grund der Schlitze in das Betriebselement über. Ist ein zunächst separat gefertigtes Testelement später ein untrennbarer Teil des Betriebselements geworden, geht das Testelement dort in das Betriebselement über, wo das einstmals separate Teil endet.

Unter einer Messstrecke im Sinne dieser Erfindung ist jede elektrisch leitende Passage zwischen den elektrisch leitenden Bereichen des Testelements zu verstehen. Diese Passage muss nicht vollständig innerhalb des Betriebselements oder der Stapelung verlaufen. Verläuft sie zum Teil außerhalb des Betriebselements oder der Stapelung, ist der durch sie fließende Strom leichter einer Bestimmung zugänglich.

Das Testelement grenzt an diejenige Grenzfläche des Betriebselements an, durch die bei fehlerfreiem Betrieb des Betriebselements ein Nennstrom in das Betriebselement eintritt oder aus diesem austritt, oder es ist ein Teil dieser Grenzfläche. Vorteilhaft grenzt es an diejenige Grenzfläche an, durch die der gesamte, durch das Betriebselement fließende, Strom hindurch tritt, oder es ist ein Teil dieser Grenzfläche. Die im Folgenden dargelegten Effekte des Testelements sind dann am stärksten ausgeprägt.

Es wurde erkannt, dass das Testelement es ermöglicht, auf einfache Weise das Vorliegen eines Fehlers in einem Betriebselement festzustellen, sei es ein einzelnes Betriebselement oder eines, das Teil einer Stapelung ist. Ein solcher Fehler bewirkt eine lokale Änderung der Stromdichte in mindestens einem elektrisch leitenden Bereich des Testelements. Als Reaktion auf diese Änderung entsteht oder verändert sich ein Strom zwischen den elektrisch leitenden Bereichen des Testelements, der durch die Messstrecke fließt und im Folgenden als Messstrom bezeichnet wird. Die Änderung oder auch nur das bloße Vorhandensein eines solchen Messstroms kann als Signal für das Vorliegen des Fehlers verwendet werden.

Dieses Signal ist besonders auffällig, wenn im fehlerfreien Zustand die Stromdichte in den elektrisch leitenden Bereichen des Testelements im Wesentlichen homogen ist. Dies kann beispielsweise gezielt herbeigeführt werden durch Aufteilung des Testelements in flächenmäßig genügend große Bereiche, auf denen die über diese Flächen gemittelten Stromdichten gleich sind. Ist das Betriebselement beispielsweise eine Brennstoffzelle, ist gemittelt über genügend große Flächen die Stromdichte im fehlerfreien Zustand als praktisch homogen anzusehen. Fließt diese Stromdichte senkrecht zur Grenzfläche zwischen der Brennstoffzelle und einem an die Brennstoffzelle angrenzenden Testelement durch diese Grenzfläche, fließt kein oder nur ein verhältnismäßig schwacher Strom durch die Messstrecke. Jeder starke Messstrom, der durch die Messstrecke fließt, ist dann ein Signal dafür, dass ein Fehler vorliegt.

Für diese Feststellung ist in den einfachsten Ausführungsformen der Erfindung nicht einmal ein Messinstrument für den Strom durch die Messstrecke erforderlich. Ist die Stapelung beispielsweise ein Brennstoffzellenstapel und ist zwischen zwei Brennstoffzellen jeweils ein Testelement angeordnet, so kann die Messstrecke eines jeden Testelements so ausgestaltet sein, dass sie von außerhalb des Brennstoffzellenstapels berührbar ist. Gibt dann etwa ein Leistungsabfall des Brennstoffzellenstapels, in dem alle Betriebselemente (Brennstoffzellen) in Reihe geschaltet sind, Anlass zu der Vermutung, dass in ihm ein Fehler vorliegt, so reicht es aus, nach dem Abschalten des Stapels nacheinander mit dem Finger alle Messstrecken zu berühren. Hat sich eine Messstrecke mehr als die anderen durch einen Messstrom erwärmt, so ist dies ein Zeichen dafür, dass dasjenige Betriebselement defekt ist, das dem Testelement, zu dem die erwärmte Messstrecke gehört, elektrisch unmittelbar vor- oder nachgeschaltet ist. Eine ähnliche Wirkung wird erzielt, wenn die Messstrecke von außerhalb des Brennstoffzellenstapels einsehbar ist und so dünn ausgestaltet ist, dass sie bei einem im Fehlerfall auftretenden hohen Messstrom durchbrennt wie eine Sicherung. Dann genügt ein Blick auf den Brennstoffzellenstapel, um festzustellen, welche Zelle defekt ist und erneuert werden muss.

In diesen einfachen Ausführungsformen liefert das Testelement lediglich die Information, dass in einem bestimmten Betriebselement ein Fehler vorliegt oder sich anbahnt. Liegt eine Stapelung von Betriebselementen vor, ist diese Information umso wertvoller, je mehr Betriebselemente die Stapelung enthält. Sie kann beispielsweise genutzt werden, um das betroffene Betriebselement in einen unkritischen Zustand zu fahren oder es durch Überbrückung seiner Funktion in der Stapelung zu entheben. Zur genaueren Analyse und Behebung des Fehlers muss erforderlichenfalls nur noch dasjenige Betriebselement aus der Stapelung ausgebaut werden, das als fehlerhaft identifiziert wurde. Nach dem Stand der Technik war es vielfach erforderlich, die Stapelung vollständig in ihre einzelnen Betriebselemente zu zerlegen, um zu ermitteln, welches fehlerhaft war. Dies ist insbesondere dann zeit- und kostenaufwändig, wenn die Betriebselemente mit Befestigungsmitteln verbunden sind, die sich nicht zerstörungsfrei lösen lassen. Beispielsweise sind Hochtemperaturbrennstoffzellen in einem Brennstoffzellenstapel vielfach durch Glaslote miteinander verklebt. Es ist schwierig, aus einem solchen Stapel eine mutmaßlich defekte Zelle herauszutrennen, ohne die sehr spröden Verbindungen aller anderen Zellen miteinander zu zerstören oder zumindest deren Gasdichtigkeit zu beeinträchtigen.

Die Möglichkeit, mit der erfindungsgemäßen Vorrichtung Fehler festzustellen, ist nicht auf Fehler in demjenigen Betriebselement eingeschränkt, das dem Testelement in Richtung eines durch das Betriebselement im fehlerfreien Fall fließenden Nennstroms elektrisch unmittelbar vor- oder nachgeschaltet ist. Beispielsweise kann sich zwischen dem Testelement und einem ausfallgefährdeten aktiven elektrischen Betriebselement, wie beispielsweise einer Brennstoffzelle, ein rein passives Betriebselement befinden, bei dem ein Ausfall nicht zu erwarten ist. Dieses passive Betriebselement kann beispielsweise eine elektrisch leitende oder halbleitende Platte, wie etwa eine Graphitplatte sein. Zeigt in einer solchen Anordnung ein hoher Messstrom in der Messstrecke eine lokale Änderung der Stromdichte an der Grenzfläche zwischen dem Testelement und der Graphitplatte an, so deutet dies aller Wahrscheinlichkeit nach nicht auf einen Fehler in der Graphitplatte selbst hin, sondern auf einen Fehler in der daran angrenzenden Brennstoffzelle.

In einer besonders vorteilhaften Ausgestaltung der Erfindung ist die Messstrecke so ausgestaltet, dass ein gegebener Stromfluss zwischen den elektrisch leitenden Bereichen in ihr eine höhere Stromdichte hervorruft als in den Bereichen selbst. Das Testelement kann beispielsweise einstückig aus elektrisch leitendem Material gefertigt sein und eine oder mehrere Verengungen, wie beispielsweise Schlitze, aufweisen. Dann befinden sich die elektrisch leitenden Bereiche beiderseits der Verengung und sind durch die Verengung beabstandet. Der Bereich, der die Verengung überbrückt, fungiert als Messstrecke. Die Wirkung der Messstrecke ist in dieser Ausgestaltung, dass sie einen im Fehlerfall zwischen den elektrisch leitenden Bereichen entstehenden bzw. geänderten Messstrom zu einer deutlich höheren Stromdichte aufkonzentriert, die vom Benutzer leichter bestimmt werden kann - wie beispielsweise durch eine Temperaturänderung der Messstrecke.

In einer besonders vorteilhaften Ausgestaltung der Erfindung weist mindestens ein elektrisch leitender Bereich des Testelements dort, wo er eine Grenzfläche mit einem Betriebselement bildet oder, falls das Testelement ein Teil des Betriebselements ist, in dieses übergeht, in der Stromrichtung parallel zu der Grenzfläche beziehungsweise zu dem Übergang eine höhere elektrische Leitfähigkeit auf als der an ihn angrenzende Bereich des Betriebselements. Dann führt ein Fehler in dem Betriebselement zu einem besonders großen Messstrom durch das Testelement und damit auch durch dessen Messstrecke. Je größer dieser Messstrom ist, desto besser kann er erfasst werden.

Beispielsweise kann eine Brennstoffzelle als Betriebselement durch eine Graphitplatte begrenzt sein. Ein als Metallplatte realisiertes Testelement, das an diese Graphitplatte angrenzt, kann eine um den Faktor 300-10.000 höhere Leitfähigkeit in der Stromrichtung parallel zu der Grenzfläche aufweisen als die Graphitplatte.

Der Messstrom steht in dieser Ausgestaltung zudem senkrecht zur Richtung des Nennstroms, der senkrecht zu der Grenzfläche mit dem Betriebselement beziehungsweise zum Übergang in das Betriebselement im Zuge des bestimmungsgemäßen Betriebs durch das Betriebselement oder durch die Stapelung fließt. Dadurch kann er messtechnisch besser von diesem Nennstrom unterschieden werden, so dass auch kleinere Defekte des Betriebselements, die nur zu einem im Vergleich zum Nennstrom kleinen Messstrom führen, erkannt werden können. Insbesondere steht das durch den Messstrom bewirkte Magnetfeld senkrecht auf dem durch den Nennstrom bewirkten Magnetfeld.

Sofern das Testelement auch mit dem zweiten Betriebselement einer Stapelung elektrisch kontaktiert ist, bewirkt es zudem, dass die Auswirkungen des Fehlers auf das Funktionieren des zweiten Betriebselements und der sich in der Stapelung hieran anschließenden weiteren Betriebselemente minimiert werden. Durch die hohe Leitfähigkeit senkrecht zur Grenzfläche mit dem ersten Betriebselement beziehungsweise zu dem Übergang in dieses Betriebselement wird die dort vorliegende Stromdichteverteilung durch hohe Messströme innerhalb des Testelements zumindest teilweise homogenisiert, so dass die Stromdichteverteilung an der Grenzfläche mit dem zweiten Betriebselement beziehungsweise am Übergang in dieses Betriebselement sich einem homogenen Zustand annähert. Ein solcher homogener Zustand wird in vielen Stapelungen, wie beispielsweise Brennstoffzellenstapeln, als Normalzustand angestrebt.

Diese Wirkung eines Testelements, bei dem ein elektrisch leitender Bereich in der Stromrichtung parallel zur Grenzfläche mit dem Betriebselement oder zum Übergang in das Betriebselement eine höhere elektrische Leitfähigkeit aufweist als der an ihn angrenzende Bereich des Betriebselements, lehrt, dass es in einer Stapelung mehrerer Betriebselemente allgemein vorteilhaft ist, ein Element mit solchermaßen anisotropen Leitfähigkeiten vorzusehen. Unabhängig davon, ob ein solches Element Beabstandungen zwischen elektrisch leitenden Bereichen aufweist und somit als Testelement ausgestaltet ist, homogenisiert es bereits die Stromdichteverteilung. Eine solchermaßen homogenisierte Stromdichteverteilung wird in vielen Stapelungen, beispielsweise Brennstoffzellenstapeln, als wünschenswerter Normalzustand angestrebt. Insbesondere werden dadurch eine lokale Überlastung einzelner Bereiche von Betriebselementen sowie daraus entstehende Folgeschäden, beispielsweise durch lokale Temperaturgradienten, unterbunden.

Beispielsweise hängt das Verhalten vieler Betriebselemente von der Stromdichte oder der Temperatur ab und ist etwa nur in einem eng begrenzten Bereich um einen diesbezüglichen Arbeitspunkt linear oder in anderer Weise gutartig.

Das solchermaßen die Stromdichte homogenisierende Element kann beispielsweise eine Kombination aus einer gut leitenden und einer schlecht leitenden Schicht sein, wobei innerhalb der Einzelschichten die Leitfähigkeit nicht anisotrop sein muss. Die schlecht leitende Schicht führt zwar in die Stapelung insgesamt einen Widerstand ein. Es wurde jedoch erkannt, dass die Gesamtleistung der Stapelung andererseits durch die Homogenisierung der Stromdichte gesteigert wird, so dass der Vorteil der homogenisierten Stromdichte per Saldo nicht mit einer nennenswerten Leistungsminderung der gesamten Stapelung erkauft werden muss.

Das Element sollte in diesem Fall so orientiert sein, dass die schlecht leitende Schicht zwischen dem Betriebselement und der gut leitenden Schicht angeordnet ist. Liegt das Element zwischen zwei Betriebselementen, kann auch eine gut leitende Schicht zwischen zwei schlecht leitenden Schichten angeordnet sein. Die Wirkung ist jeweils, dass der an die schlecht leitende Schicht angrenzende Bereich des Betriebselements bereits zur Homogenisierung der Stromdichte herangezogen wird.

Diese Überlegungen bezüglich der Reihenfolge der Schichten relativ zum Stromfluss gelten auch für entsprechend ausgestaltete Elemente, die beabstandete elektrisch leitende Bereiche aufweisen und somit als erfindungsgemäße Testelemente ausgebildet sind.

Das Material des Betriebselements kann in einem ungünstigen Fall eine Leitfähigkeit aufweisen, die einerseits so hoch ist, dass durch ein an dieses Betriebselement angrenzendes Testelement ein zu geringer Messstrom fließt, die aber andererseits so niedrig ist, dass ein in die Grenzfläche des Betriebselements hineinpräpariertes Testelement ebenfalls keinen ausreichenden Messstrom liefert. Welcher Bereich an Leitfähigkeiten in diesem Sinne ungünstig ist, hängt von Materialien und Geometrie der Betriebs- und Testelemente und hier insbesondere von Anzahl und Geometrie der Beabstandungen zwischen den elektrisch leitenden Bereichen ab. Beispielsweise liegt der Bereich der ungünstigen Leitfähigkeiten bei Brennstoffzellen zwischen $5*10^5$ und $5*10^6$ Sm$^{-1}$. In einem solchen Fall ist der Messstrom durch ein an das Betriebselement angrenzendes Testelement deutlich erhöht, wenn vorteilhaft die Beabstandung zwischen den elektrisch leitenden Bereichen des Testelements in das Betriebselement hinein fortgesetzt ist, bevorzugt bis an die Grenze zu einem Bereich des Betriebselements mit deutlich geringerer Leitfähigkeit. Beispielsweise kann eine Brennstoffzelle als Betriebselement nach außen hin durch Schichtungen aus verschiedenen Materialien begrenzt sein. Weist die äußerste Schicht eine ungünstige Leitfähigkeit auf, so kann die Beabstandung durch sie hindurch bis an die Grenze der nächsten, schlechter leitenden Schicht fortgesetzt sein.

In einer besonders vorteilhaften Ausgestaltung der Erfindung weist die Vorrichtung Messmittel zur Bestimmung einer vom Strom durch die Messstrecke abhängigen Messgröße auf. Diese Messmittel können beispielsweise ein Strommessgerät, ein Magnetfeldmessgerät oder ein Wärmemessgerät umfassen. Die Messmittel erfassen die Information über das Vorliegen eines Fehlers im Betriebselement, die in dem Messstrom enthalten ist.

Ein Magnetfeldmessgerät als Messmittel bietet den Vorteil, dass kein direkter elektrischer Kontakt und auch keine direkte Sichtverbindung auf das Betriebselement oder die Stapelung erforderlich sind, um den Messstrom zu erfassen. Somit entfällt insbesondere bei einer Stapelung, die viele Testelemente enthält, ein großer Verkabelungsaufwand. Vorteilhaft ist die Messstrecke so relativ zum Testelement angeordnet, dass sie zumindest zum Teil in einem Außenbereich, etwa an einer Außenkante, des Betriebselements bzw. der Stapelung oder auch außerhalb des Betriebselements bzw. der Stapelung verläuft, so dass der Sensor des Magnetfeldmessgeräts möglichst nahe an die das Magnetfeld erzeugende Messstrecke geführt werden kann.

Ein Wärmemessgerät als Messmittel und hier insbesondere eine auf Wärmestrahlung sensitive Kamera kann, eine geeignete Positionierung der Messstrecken relativ zu den Testelementen vorausgesetzt, alle Messstrecken des Betriebselements oder der Stapelung gleichzeitig überwachen. Damit kann auch erfasst werden, wie stark sich ein Fehler in einem Betriebselement auf benachbarte Betriebselemente auswirkt. Ein Wärmemessgerät vermag darüber hinaus auch andere Fehler zu erkennen, die zu einer lokalen Überhitzung des Betriebselements oder der Stapelung führen, was die Betriebssicherheit verbessert.

In einer besonders vorteilhaften Ausgestaltung der Erfindung besteht mindestens eine direkte Sichtlinie von einem Punkt außerhalb des Betriebselements oder der Stapelung auf die Messstrecke. Dann kann der Strom durch die Messstrecke optisch, beispielsweise durch die Beobachtung der von ihr abgegebenen Wärmestrahlung, erfasst werden.

Vorteilhaft weist mindestens ein Testelement eine längliche Beabstandung zwischen elektrisch leitenden Bereichen auf. Beispielsweise reicht bei einem Schlitz als Beabstandung, der mehrere Zentimeter lang ist, bereits eine Breite von einem Zehntel bis einem Millimeter aus. Die Querschnittsfläche eines solchen Testelements steht fast vollständig für die Übernahme des Messstroms aus dem Betriebselement zur Verfügung.

In einer besonders vorteilhaften Ausgestaltung der Erfindung weist die Vorrichtung mindestens zwei Testelemente auf, die jeweils an mindestens ein Betriebselement angrenzen oder, falls sie ein Teil des Betriebselements sind, in dieses übergehen. Dabei kann das Betriebselement vorteilhaft elektrisch zwischen die beiden Testelemente geschaltet sein, insbesondere in einer Stapelung. Die Testelemente können alternativ aber auch aneinander angrenzen.

Vorteilhaft ist mindestens eine Beabstandung zwischen elektrisch leitenden Bereichen des ersten Testelements gegenüber mindestens einer Beabstandung zwischen elektrisch leitenden Bereichen des zweiten Testelements lateral versetzt angeordnet. Alternativ oder auch in Kombination schließt vorteilhaft mindestens eine Beabstandung zwischen elektrisch leitenden Bereichen des ersten Testelements einen Winkel mit mindestens einer Beabstandung zwischen elektrisch leitenden Bereichen des zweiten Testelements ein, wobei der Winkel insbesondere zwischen 70 und 110 Grad betragen kann.

Aus der Information, dass in zwei Testelementen gleichzeitig ein Messstrom zwischen elektrisch leitenden Bereichen fließt, können Rückschlüsse darauf gezogen werden, wo ein Fehler im Betriebselement vorliegt. Dies gilt im Besonderen, wenn das Betriebselement elektrisch zwischen die beiden Testelemente geschaltet ist. Die Genauigkeit, mit der der Fehler räumlich eingegrenzt werden kann, lässt sich noch verbessern, indem zusätzliche Annahmen oder sonstige a-priori-Informationen über das Betriebselement oder die Stapelung und deren jeweilige Funktionsweise mit ausgewertet werden. Dies kann beispielsweise die Annahme sein, dass ein Fehler im Betriebselement grundsätzlich nur zu einer Erniedrigung und nicht zu einer Erhöhung der lokalen Stromdichte führt, oder die Annahme, dass das Betriebselement entlang der gesamten Grenzfläche mit dem Testelement beziehungsweise entlang des gesamten Übergangs zwischen ihm und dem Testelement nur einen einzigen Fehler aufweist.

Die Eingrenzung des Fehlers wird dabei mit einem im Vergleich zum Stand der Technik deutlich verringerten Verkabelungsaufwand erzielt. Ist das erste Testelement in n elektrisch leitende Bereiche und das zweite Testelement in m elektrisch leitende Bereiche unterteilt, so können n*m Bereiche im Betriebselement voneinander unterschieden werden, in denen der Fehler liegen kann. Es sind jedoch hierfür nur n+m-2 Messungen von Strömen erforderlich. Nach dem Stand der Technik, etwa gemäß (D. J. L. Brett et al., "Measurement of the current distribution along a single flow channel of a solid polymer fuel cell", Electrochemistry Communications 3, 628 (2001)) musste der interessierende Bereich für die gleiche primäre Ortsauflösung in n*m voneinander isolierte Teilzellen segmentiert werden. Somit mussten für die gleiche primäre Ortsauflösung n*m Spannungen gemessen werden.

Diese primäre Ortsauflösung kann mit dem ebenfalls im Rahmen der Erfindung entwickelten Verfahren zum Betreiben durch eine geeignete Auswertung der Messdaten weiter gesteigert werden.

In einer besonders vorteilhaften Ausgestaltung der Erfindung besteht mindestens ein elektrisch leitender Bereich eines Testelements aus einem Material mit anisotroper elektrischer Leitfähigkeit. Wird hierdurch die Leitfähigkeit des Bereichs parallel zur Grenzfläche zum Betriebselement beziehungsweise parallel zum Übergang in das Betriebselement größer als die Leitfähigkeit senkrecht zu dieser Grenzfläche beziehungsweise zu diesem Übergang, wird der bei Vorliegen eines Fehlers fließende Messstrom zwischen den elektrisch leitenden Bereichen des Testelements verstärkt. Dies ist insbesondere vorteilhaft, wenn nur ein einziges Betriebselement oder aber ein Betriebselement, das ein Randelement einer Stapelung ist, auf Fehler zu untersuchen ist.

Eine anisotrope elektrische Leitfähigkeit des Testelements kann aber beispielsweise auch erzielt werden, wenn das Testelement aus einer in elektrisch leitende Bereiche aufgeteilten metallischen Schicht und einer daran angrenzenden deutlich schlechter leitenden Schicht besteht.

In einer besonders vorteilhaften Ausgestaltung der Erfindung ist die Stapelung ein Brennstoffzellenstapel. Ein solcher Stapel ist im normalen Betrieb, wenn kein Fehler vorliegt, von einer nahezu vollständig homogenen Stromdichte durchsetzt. Liegt dagegen ein Fehler vor, der die Leitfähigkeit lokal ändert, so ist der durch die Messstrecke fließende Messstrom besonders hoch (Größenordnung Ampere), da die in Brennstoffzellen verbauten Materialien eine relativ schlechte elektrische Leitfähigkeit aufweisen. Durch das Fließen des Messstroms wird zugleich die Inhomogenität in der Stromdichteverteilung vor deren Übertritt aus dem Testelement in die nächste Brennstoffzelle zumindest teilweise aufgehoben, so dass ein Defekt in einer Zelle nicht mehr so stark auf benachbarte Zellen oder gar auf alle Zellen des Stapels ausstrahlt wie nach dem Stand der Technik.

Die Erfindung bezieht sich auch auf ein Verfahren zur Herstellung der erfindungsgemäßen Vorrichtung aus einem elektrischen Betriebselement oder aus einer Stapelung mindestens zweier elektrischer Betriebselemente. Das Verfahren ist dadurch gekennzeichnet, dass elektrisch leitende Bereiche in dem Betriebselement, durch die bei fehlerfreiem Betrieb des Betriebselements ein Nennstrom in das Betriebselement eintritt oder aus diesem austritt, voneinander getrennt werden, beispielsweise durch das Einbringen von Beabstandungen. Dabei werden die elektrischen Bereiche durch nachträgliches Einbringen einer elektrisch leitenden Messstrecke wieder verbunden, so dass sie in Verbindung mit dieser Messstrecke ein Testelement bilden, oder es wird alternativ bereits bei der Trennung der elektrisch leitenden Bereiche eine Messstrecke zwischen diesen Bereichen belassen.

Im Rahmen der Erfindung wurde ein Verfahren zum Betreiben der erfindungsgemäßen Vorrichtung entwickelt. Dabei wird mindestens ein elektrisch leitender Bereich des Testelements logisch in Lösungsbereiche unterteilt. Bei der Auswertung, ob die Stromdichte in den Lösungsbereichen lokal geändert ist, wird mindestens eine Gleichung aufgestellt, in der der Beitrag mindestens eines Lösungsbereichs zum Strom durch mindestens eine Messstrecke und der Gesamtstrom durch diese Messstrecke miteinander verknüpft werden.

Die Lösungsbereiche sind Bereiche, in denen gefragt ist, ob die Stromdichte dort lokal geändert ist. Sie können wesentlich kleiner sein als die elektrisch leitenden Bereiche des Testelements oder auch die Überschneidungsflächen von elektrisch leitenden Bereichen mehrerer Testelemente.

Es wurde erkannt, dass die Lösungen der Gleichung den Raum der Möglichkeiten aufspannen, inwiefern die Stromdichte auf dem in Lösungsbereiche unterteilten elektrisch leitenden Bereich des Testelements lokal geändert sein kann. Die Ortsauflösung dieser Information ist durch die Größe der Lösungsbereiche vorgegeben und kann somit besser sein als die primäre Ortsauflösung, die durch die Größe des elektrisch leitenden Bereichs des Testelements vorgegeben ist. Die Gleichung ist insbesondere dann aussagekräftig, wenn die Beiträge mehrerer Lösungsbereiche zum Strom durch mindestens eine Messstrecke und der Gesamtstrom durch diese Messstrecke miteinander verknüpft werden.

In einer besonders vorteilhaften Ausgestaltung der Erfindung werden mehrere Gleichungen aufgestellt, die sich in den Beiträgen der Lösungsbereiche und/oder in den Gesamtströmen, mit denen diese Beiträge verknüpft werden, voneinander unterscheiden. Vorteilhaft enthalten dabei mindestens zwei Gleichungen einen Beitrag, der sich auf denselben Lösungsbereich bezieht. Jede weitere Gleichung, deren gleichzeitige Erfüllung gefordert wird, schränkt den Raum der möglichen Lösungen ein und führt somit zu einem Mehr an Information darüber, welche Feinverteilung von lokalen Stromdichteänderungen in den Lösungsbereichen zu den im Groben beobachteten Messströmen geführt hat.

Werden die Beiträge mehrerer Lösungsbereiche zum Strom durch mindestens eine Messstrecke und der Gesamtstrom durch diese Messstrecke miteinander verknüpft und/oder werden mehrere Gleichungen aufgestellt, die sich in den Beiträgen der Lösungsbereiche und/oder in den Gesamtströmen, mit denen diese Beiträge verknüpft werden, voneinander unterscheiden, so macht sich das erfindungsgemäße Verfahren die elektrisch leitende Kopplung der Lösungsbereiche zu Nutze. Diese Kopplung ist ein gegenständliches Merkmal der mit dem Verfahren betriebenen erfindungsgemäßen Vorrichtung. Sie ist die physikalische Ursache dafür, dass die Berücksichtigung der Beiträge weiterer Lösungsbereiche sowie die Aufstellung mehrerer Gleichungen den Raum der möglichen Lösungen einschränken.

In einer besonders vorteilhaften Ausgestaltung der Erfindung werden die Gleichung bzw. die Gleichungen unter Berücksichtigung von Nebenbedingungen gelöst, die die Art des im Betriebselement vermuteten Fehlers näher charakterisieren. Dadurch wird der Raum der möglichen Lösungen in seiner Dimensionalität noch weiter eingeschränkt, im Idealfall sogar bis auf Null, also bis hin zu einer eindeutigen Lösung des Gleichungssystems. Die Nebenbedingungen können sich beispielsweise auf Anzahl und Größe der Fehler oder die Stärke der durch sie verursachten lokalen Stromdichteänderungen beziehen.

Die Gleichung bzw. die Gleichungen können aber alternativ oder in Kombination auch unter Berücksichtigung von Nebenbedingungen gelöst werden, die das Ergebnis der Messung einer weiteren, von mindestens einem Gesamtstrom durch eine Messstrecke abhängigen, physikalischen Messgröße repräsentieren. Hierfür kommen beispielsweise Messungen des Magnetfelds im Außenraum des elektrischen Betriebselements oder der Stapelung in Betracht.

Beispielsweise können mit tomographischen Verfahren, die Regularisierungsmethoden ausnutzen, diejenigen Lösungen bestimmt werden, die die schwächsten Änderungen der lokalen Stromdichte als Ursache für die beobachteten Messströme benennen oder die Änderungen in der geringsten Anzahl der Lösungsbereiche als Ursache für die beobachteten Messströme benennen. Ist das Gleichungssystem ein lineares, so sind diese Eigenschaften der Lösungen an den Singularwerten der Matrix ablesbar, die das Gleichungssystem repräsentiert.

Spezieller Beschreibungsteil

Nachfolgend wird der Gegenstand der Erfindung anhand von Figuren näher erläutert, ohne dass der Gegenstand der Erfindung dadurch beschränkt wird.

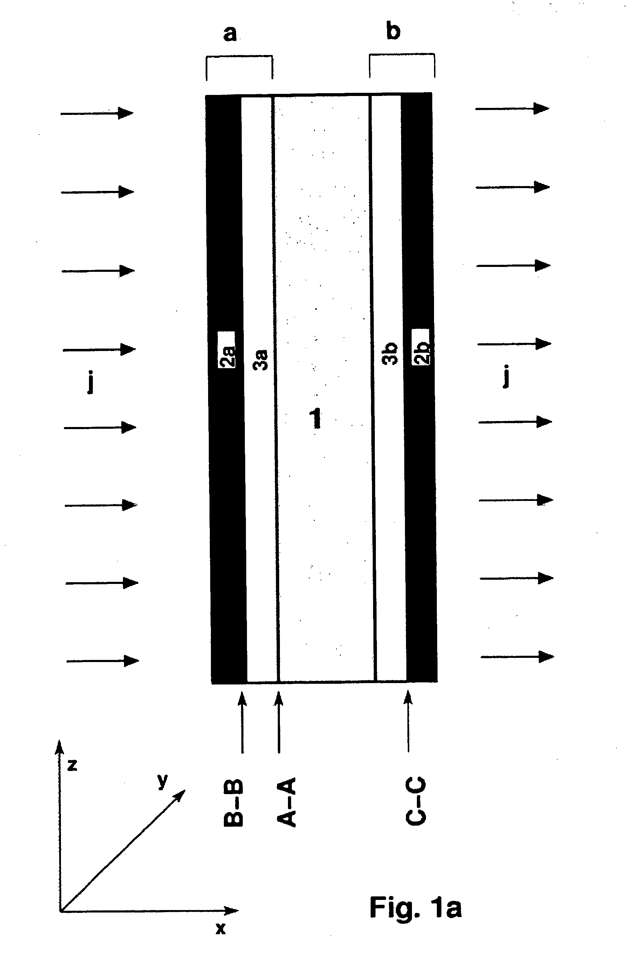

Figur 1a zeigt einen Schnitt durch eine Ausführungsform der erfindungsgemäßen Vorrichtung. Das Betriebselement 1 ist auf Fehler zu untersuchen. An das Betriebselement 1 grenzen zwei Testelemente a und b an, die jeweils aus einer elektrisch schlecht leitenden Schicht (2a bzw. 2b) und einer in elektrisch leitende Bereiche aufgeteilten Metallschicht (3a bzw. 3b) bestehen. Testelement a grenzt links an das Betriebselement 1. Testelement b grenzt rechts an das Betriebselement 1. Die Vorrichtung wird homogen von einer Stromdichte j durchflossen.

Die schlecht leitenden Schichten 2a und 2b haben eine im Vergleich zu den Metallschichten 3a und 3b schlechte elektrische Leitfähigkeit. Sie dienen dazu, eventuelle Messströme in Folge von Fehlern im Betriebselement 1 in einer Stromrichtung senkrecht auf der Stromdichte j durch die Metallschichten zu lenken.

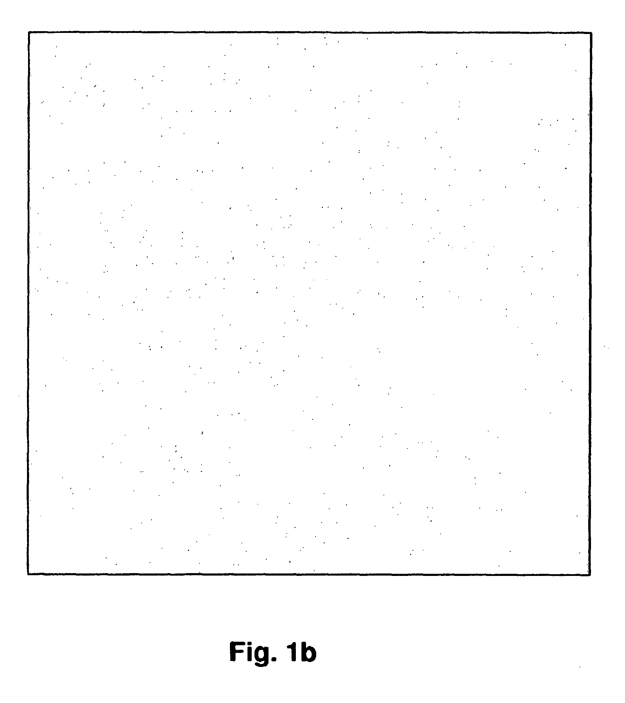

Figur 1b zeigt einen Schnitt entlang der Linie A-A in Figur 1a durch das Betriebselement 1. Das Betriebselement ist homogen und weist keine Fehler auf.

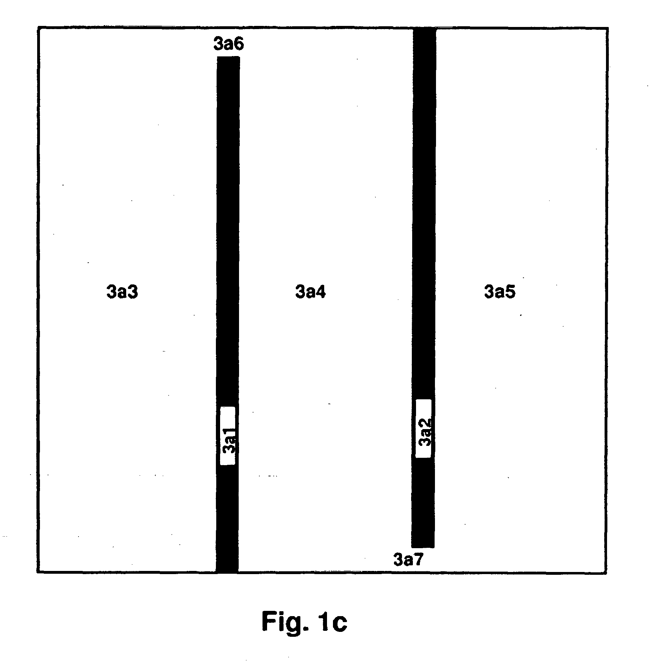

Figur 1c zeigt einen Schnitt entlang der Linie B-B in Figur 1a durch die Metallschicht 3a. Zwei Beabstandungen 3a1 und 3a2 unterteilen die Metallschicht 3a und somit auch das Testelement a in elektrisch leitende Bereiche 3a3, 3a4 und 3a5. Die Bereiche 3a3 und 3a4 sind über eine elektrisch leitende Messstrecke 3a6 miteinander verbunden. Die Bereiche 3a4 und 3a5 sind über eine elektrisch leitende Messstrecke 3a7 miteinander verbunden.

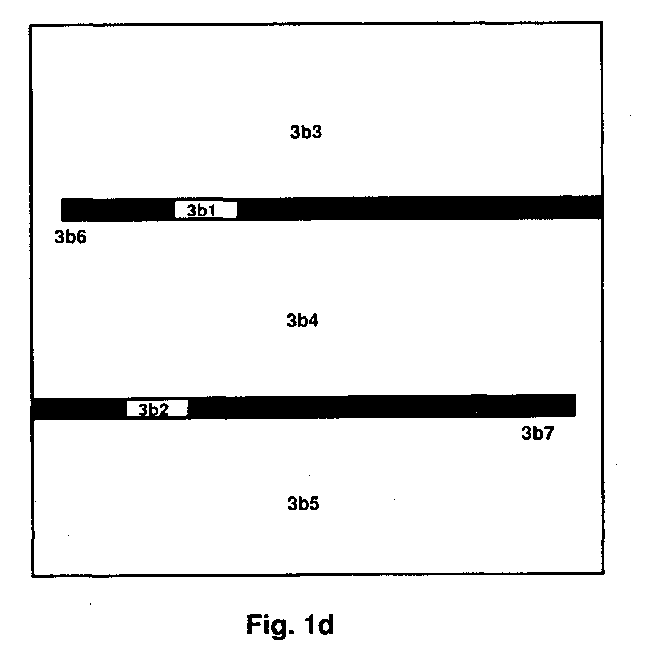

Figur 1d zeigt einen Schnitt entlang der Linie C-C in Figur 1a durch die Metallschicht 3b. Zwei Beabstandungen 3b1 und 3b2 unterteilen die Metallschicht 3b und somit auch das Testelement b in elektrisch leitende Bereiche 3b3, 3b4 und 3b5. Die Bereiche 3b3 und 3b4 sind über eine elektrisch leitende Messstrecke 3b6 miteinander verbunden. Die Bereiche 3b4 und 3b5 sind über eine elektrisch leitende Messstrecke 3b7 miteinander verbunden.

Beide Metallschichten 3a und 3b sind jeweils einstückig aus elektrisch leitendem Material gefertigt, in das die Beabstandungen als Schlitze eingebracht wurden. Die Beabstandungen 3a1 und 3a2 der Metallschicht 3a und somit des Testelements a schließen einen rechten Winkel mit den Beabstandungen 3b1 und 3b2 der Metallschicht 3b und somit des Testelements b ein.

Die Messstrecken 3a6, 3a7, 3b6 und 3b7 befinden sich jeweils an der Außenkante der Metallschichten 3a und 3b und damit auch an der Außenkante der Testelemente a und b sowie auch an der Außenkante des Betriebselements 1. Die durch sie fließenden Ströme sind somit gut einer Messung von außerhalb des Betriebselements 1 zugänglich, beispielsweise durch Messung der von ihnen verursachten Magnetfelder.

Da das Betriebselement 1 homogen ist und keine Fehler aufweist, ist die Stromverteilung in der gesamten Vorrichtung homogen. Seien J der in Figur 1a von links nach rechts fließende Gesamtstrom und F die Querschnittsfläche der Vorrichtung, dann beträgt die homogene Stromdichte in dem in Figur 1 a eingezeichneten Koordinatensystems

$$j_x = \frac{J}{F}, \; j_y = 0, \; j_z = 0 \, .$$

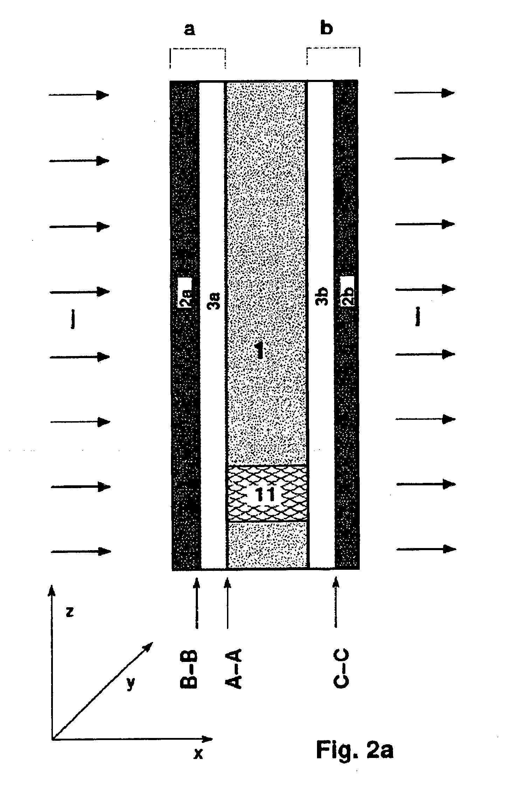

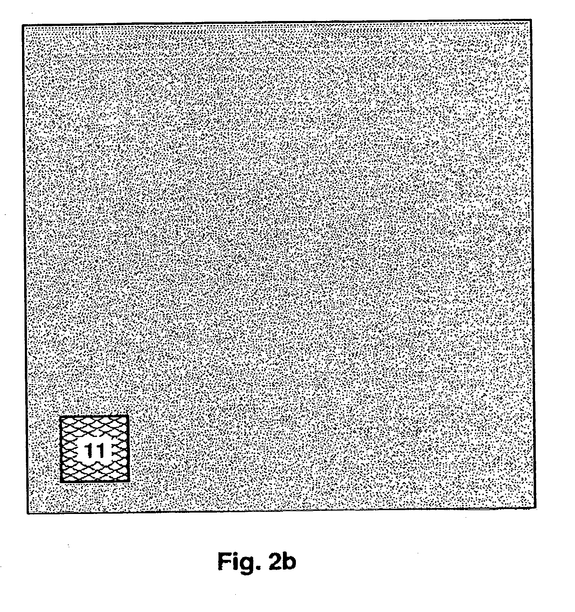

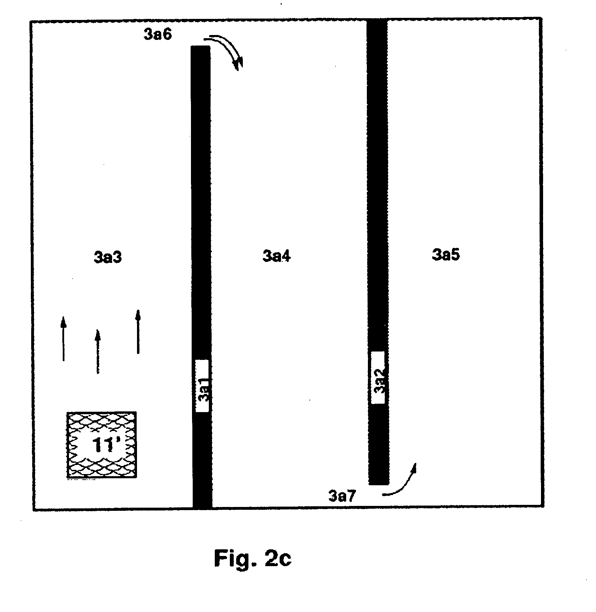

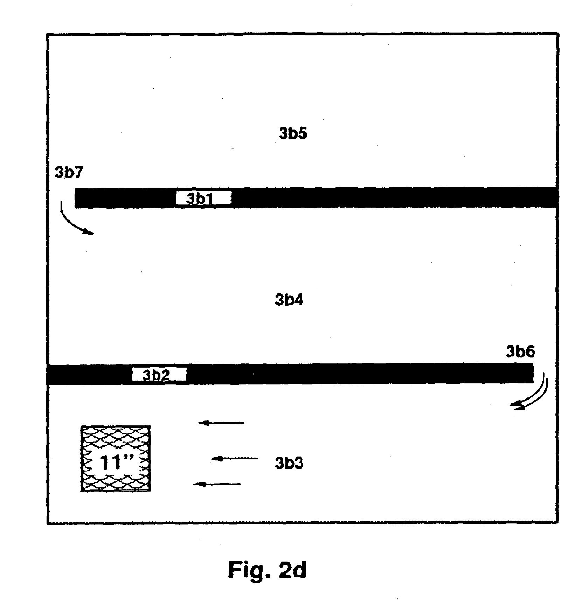

Somit fließt kein Strom durch die Messstrecken 3a6, 3a7, 3b6 und 3b7. In Figur 2 wird demonstriert, wie sich die Situation bei Vorliegen einer Fehlstelle im Betriebselement 1 ändert. Figur 2a entspricht bis auf die dort eingezeichnete Fehlstelle 11, die elektrisch vollkommen isolierend wirkt, Figur 1a.

Figur 2b zeigt analog zu Figur 1b einen Schnitt entlang der Linie A-A in Figur 2a durch das Betriebselement 1. Das Betriebselement 1 weist jetzt in der linken unteren Ecke von Figur 2b eine Fehlstelle 11 mit Flächeninhalt $f$ auf, in der es elektrisch vollkommen isolierend wirkt. Im Bereich der Fehlstelle 11 gilt

$$j_{11,x} = 0, \; j_{11,y} = 0, \; j_{11,z} = 0 \, .$$

Außerhalb dieser Fehlstelle 11 gilt innerhalb des Betriebselements 1 auf Grund der Stromerhaltung näherungsweise

$$j_{11,x} = \frac{J}{F - f}, \; j_{11,y} = 0, \; j_{11,z} = 0 \, ,$$

wobei Ströme mit $j_z \neq 0$ auf Grund der angenommenen geringen elektrischen Leitfähigkeit des Betriebselements 1 außer Acht gelassen wurden.

In den Figuren 2c und 2d ist dargestellt, wie sich diese Fehlstelle 11 auf die Ströme in den Messstrecken auswirkt.

Figur 2c zeigt analog zu Figur 1c einen Schnitt entlang der Linie B-B in Figur 2a durch die Metallschicht 3a. Zusätzlich ist der Bereich 11' eingezeichnet, in dem die Metallschicht 3a an die Fehlstelle 11 des Betriebselements 1 angrenzt. Durch die Pfeile in Figur 2c wird angedeutet, dass ein großer Strom, der die Fehlstelle 11 nicht passieren kann, als Messstrom durch die Metallschicht 3a fließt. Die Stärke dieses Messstroms ist am höchsten im elektrisch leitenden Bereich 3a3; sie nimmt vom Bereich 3a3 zum Bereich 3a4 sowie vom Bereich 3a4 zum Bereich 3a5 jeweils ab, da entlang des gesamten Weges ständig ein Teil des Messstroms aus der Metallschicht 3a in das Betriebselement 1 abfließt. Dementsprechend fließt durch die Messstrecke 3a6 ein höherer Strom als durch die Messstrecke 3a7. Die Ströme $i_{3a6}$ und $i_{3a7}$ durch diese Messstrecken haben die Stärke

$$i_{3a6} = 2 \cdot i_Q$$

$$i_{3a7} = i_Q$$

mit

$$i_Q = \frac{J \cdot f}{3(F - f)}.$$

Hierbei wurde die Leitfähigkeit innerhalb der Metallschicht 3a als unendlich angenommen.

Figur 2d zeigt analog zu Figur 1d einen Schnitt entlang der Linie C-C in Figur 2a durch die Metallschicht 3b. Zusätzlich ist der Bereich 11" eingezeichnet, in dem die Metallschicht 3b an die Fehlstelle 11 des Betriebselements 1 angrenzt. Die Pfeile in Figur 2d deuten an, dass in Folge der Fehlstelle 11 des Betriebselements 1 im elektrisch leitenden Bereich 3b5 nur ein geringer Messstrom fließt. Der Messstrom nimmt vom Bereich 3b5 zum Bereich 3b4 und vom Bereich 3b4 zum Bereich 3b3 jeweils zu, da im Bereich 3b3 Strom fehlt, welcher auf Grund der Fehlstelle 11 nicht vom Betriebselement 1 in den Bereich 11'' der Metallschicht 3b übergetreten ist. Dementsprechend fließt durch die Messstrecke 3b6 ein höherer Strom als durch die Messstrecke 3b7. Die Ströme haben die Stärke

$$i_{3b6} = -2 \cdot i_Q$$

$$i_{3b7} = -i_Q.$$

Der Unterschied zwischen den durch die Messstrecken 3a6 und 3a7 fließenden Strömen liefert die Information, dass sich die Fehlstelle in dem Bereich des Betriebselements 1 befindet, der an den Bereich 3a3 der Metallschicht 3a angrenzt. Der Unterschied zwischen den durch die Messstrecken 3b6 und 3b7 fließenden Strömen liefert weiterhin die Information, dass sich die Fehlstelle in dem Bereich des Betriebselements 1 befindet, der an den Bereich 3b3 der Metallschicht 3b angrenzt. Aus der Summe beider Informationen lässt sich folgern, dass sich die Fehlstelle in einem Bereich des Betriebselements 1 befindet, der an die Bereiche 3a3 und 3b3 angrenzt, also in der linken unteren Ecke von Figur 2b lokalisiert sein muss.

Somit ist gezeigt, dass in diesem Ausführungsbeispiel der Vorrichtung ein Fehler im Betriebselement 1 nicht nur festgestellt, sondern auch räumlich eingegrenzt werden kann. Liegt der Fehler an einer anderen Stelle im Betriebselement 1, so kann ganz analog ermittelt werden, in welchem der durch die übereinander gelegten Beabstandungen 3a1, 3a2, 3b1 und 3b2 gebildeten neun Quadranten des Betriebselements 1 der Fehler lokalisiert ist und wie stark die Störung ist.

Die Ströme $i_{3a6}$, $i_{3a7}$, $i_{3b6}$ und $i_{3b7}$ liegen in Brennstoffzellen und Brennstoffzellenstapeln in der Größenordnung von Ampere.

Durch das Einbringen weiterer Beabstandungen in die Metallschichten 3a und 3b kann die Ortsauflösung für die Lokalisierung von Fehlern weiter gesteigert werden. Die sinnvolle Ortsauflösung hängt von der Größe der Defekte ab sowie von der Stärke, mit der diese die lokale Stromdichteverteilung ändern. Je größer die lokale Änderung, desto kleiner können die elektrisch leitenden Bereiche werden, ohne dass die Änderungen in den Messströmen unter die Grenze der zuverlässigen Nachweisbarkeit sinken.

Durch eine Vielzahl elektrisch nicht oder nur schlecht leitender Beabstandungen zwischen den elektrisch leitenden Bereichen von Testelementen wird die Querschnittsfläche verringert, die für die Leitung von Strom durch das Betriebselement zur Verfügung steht. Abhängig vom konkreten Anwendungsfall ist dieser Leistungsverlust gegen den Gewinn an Ortsauflösung durch den Einbau vieler Beabstandungen abzuwägen.

Die mit dem oben beschriebenen analytischen Modell erzielten Ergebnisse wurden durch eine Finite-Elemente-Simulation an einem vereinfachten Brennstoffzellenstapel bestätigt.

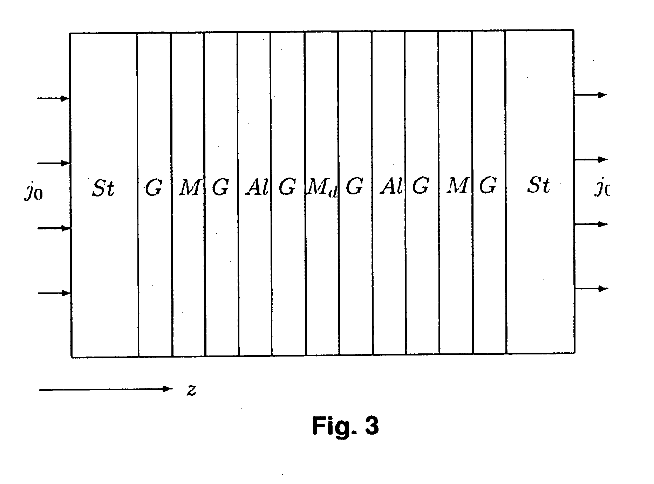

In Figur 3 ist der vereinfachte Brennstoffzellenstapel, der als modellhaftes zweites Ausführungsbeispiel der erfindungsgemäßen Vorrichtung dient, skizziert. Quadratische Platten der Kantenlänge 150 mm sind, wie in Figur 3 dargestellt, gestapelt. Die einzelnen Platten bestehen aus unterschiedlichen Materialien und sind unterschiedlich dick:

| Abkürzung | Platte | elektrische Leitfähigkeit [Sm$^{-1}$] | Dicke [mm] |
|---|---|---|---|
| St | Stahl | $10^6$ | 5 |
| G | Graphit | $4*10^3$ | 1 |
| M | MEA | 3,33 | 1 |
| Al | Aluminium | $37*10^6$ | 1 |
| $M_d$ | MEA mit Defekt | 3,33 | 1 |

MEA symbolisiert die Membran-Elektroden-Einheit einer Brennstoffzelle. Eine Brennstoffzelle als elektrisches Betriebselement besteht in diesem Modell aus einer MEA M, die zwischen zwei Graphitplatten G angeordnet ist. In diesem Ausführungsbeispiel soll demonstriert werden, wie sich die mittlere Brennstoffzelle der Stapelung, bestehend aus der zwischen zwei Graphitplatten G angeordneten MEA mit Defekt $M_d$, auf Fehler untersuchen lässt. Zu diesem Zweck grenzt jeweils eine Aluminiumplatte Al, die als Testelement fungiert, an eine Graphitplatte G der mittleren Brennstoffzelle an.

Die Platten St, G und M sind homogen. Zur Simulation eines Defekts mit Leitfähigkeit 0 Sm$^{-1}$ ist die Platte $M_d$ zentral gelocht. Der Querschnitt des Lochs ist quadratisch mit Kantenlänge 40 mm.

Auf den beiden Stirnseiten der Stapelung wird jeweils eine konstante Stromdichte $j_0$ vorgegeben, die in der in Figur 3 eingezeichneten z-Richtung von links nach rechts verläuft. Alle anderen Außenflächen der Stapelung sind elektrisch isoliert.

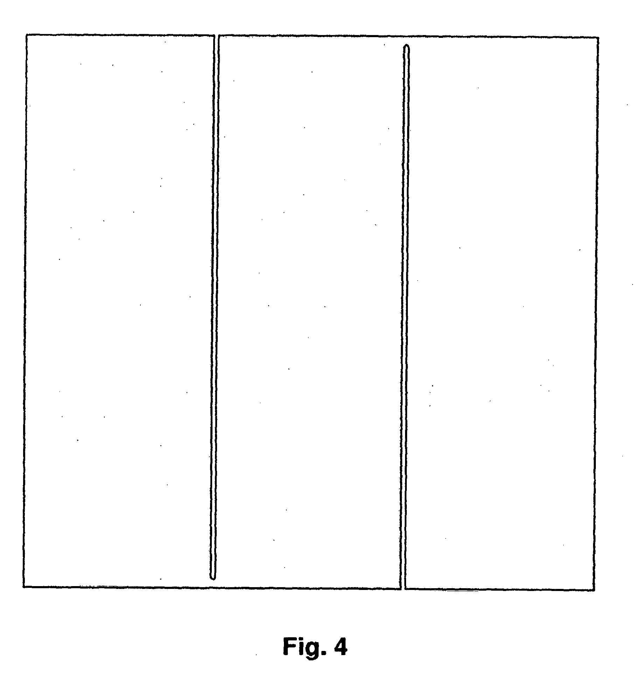

Figur 4 zeigt den Aufbau einer der Platten Al, die als Testelemente in der Stapelung fungieren. Die Platten sind jeweils mit zwei Schlitzen von 1 mm Breite verstehen, wobei der linke Schlitz oben offen ist und der rechte unten. Die Schlitze teilen das Testelement Al in drei gleich große elektrisch leitende Bereiche; der Abstand zwischen der Schlitzmitte und der nächstliegenden parallel verlaufenden Kante der Platte beträgt jeweils 50 mm. Die Schlitze wurden an den Enden mit einem Radius von 0,5 mm verrundet. Der Abstand des Scheitelpunkts des Radius zu der gegenüberliegenden Kante der Platte beträgt 2,5 mm.

Die elektrisch leitenden Bereiche der in Figur 4 gezeigten Platte Al sind durch Messstrecken am unteren Ende des linken Schlitzes sowie am oberen Ende des rechten Schlitzes elektrisch leitend miteinander verbunden.

Die beiden Platten Al in der in Figur 3 gezeigten Stapelung sind vom Aufbau identisch, sind aber um 90 Grad gegeneinander verdreht in die Stapelung eingefügt. Somit verlaufen die Schlitze in der einen Platte horizontal und in der anderen vertikal. Die Schlitze in den beiden Platten schließen daher rechte Winkel ein.

Zur Simulation der Stromdichteverteilung $j$ innerhalb der Stapelung wird das folgende Randwertproblem gelöst:

$$E = -\operatorname{grad} u$$

$$j = \sigma \cdot E$$

$$\operatorname{div} j = 0 \qquad \text{in } \Omega$$

$$j_z = j_0 \quad \text{auf } \Gamma_0$$

$$j_\perp = 0 \quad \text{auf } \Gamma_1$$

mit

$u$ : elektrisches Potential
E : elektrisches Feld
$\sigma$ : elektrische Leitfähigkeit
j : Stromdichte
$\Omega$ : gesamte Stapelung (Vereinigung aller Platten)
$\Gamma_0$ : beide Stirnseiten von $\Omega$ in z-Richtung
$\Gamma_1$ : Rest der Außenfläche von $\Omega$ (alles, was nicht zu $\Gamma_0$ gehört)
$j_z$ : z-Komponente der Stromdichte
$j_\perp$ : Komponente der Stromdichte senkrecht zum jeweiligen Rand
$j_0$ : vorgegebene Stromdichte

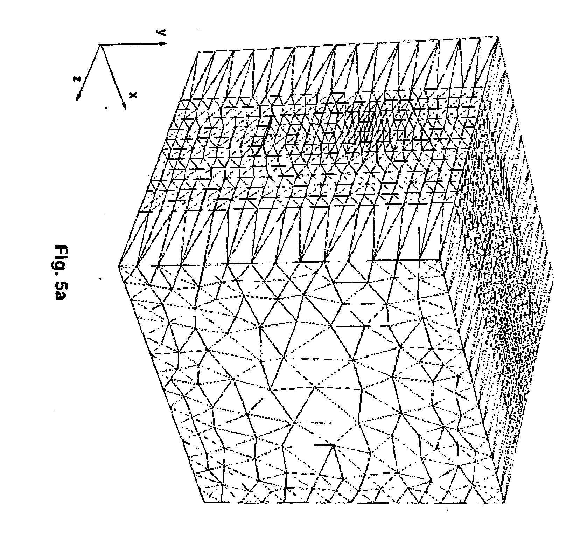

Das Modell ist mit etwa 68.000 Tetraederelementen zweiter Ordnung vernetzt, wobei auf eine angepasste Netzstruktur im Bereich der Schlitze besonderer Wert gelegt wird. Die Vernetzung ist in den Figuren 5a bis 5c skizziert.

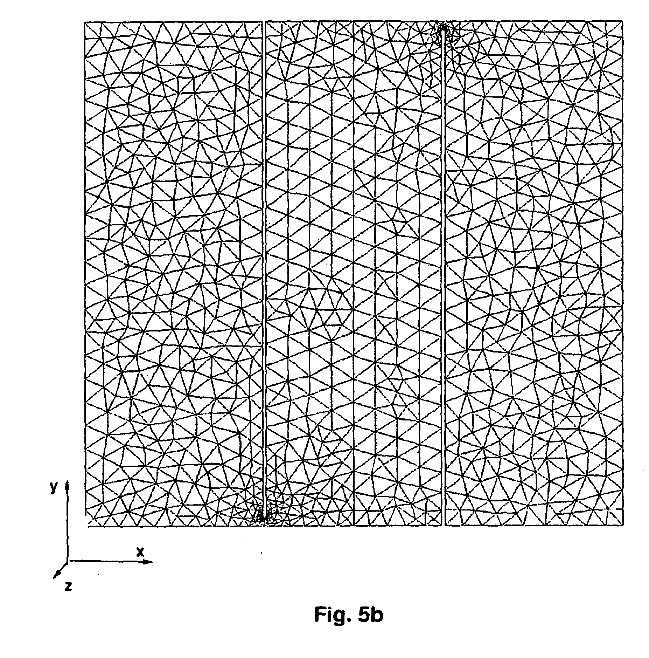

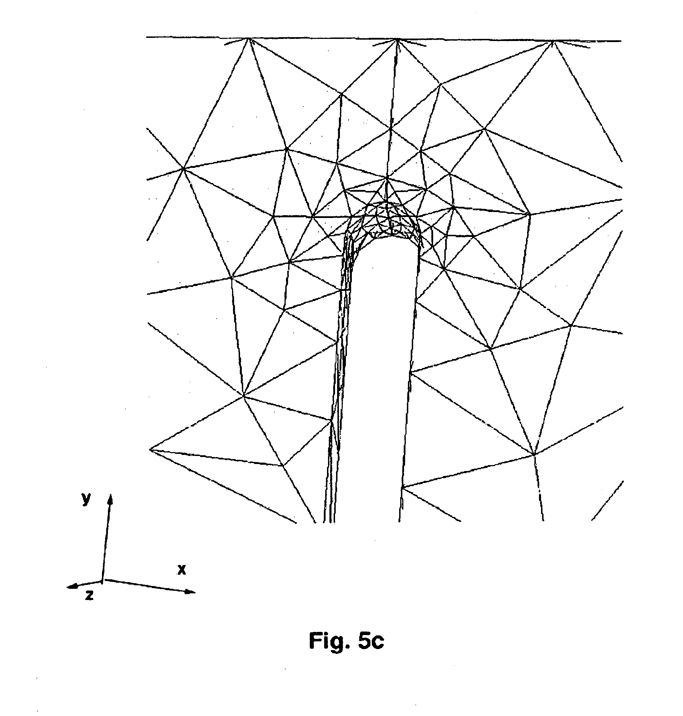

Figur 5a zeigt die von außerhalb der Stapelung sichtbaren Kanten der Tetraederelemente, wobei rechts in Figur 5a die rechte Platte St im Vordergrund ist. Figur 5b zeigt die sichtbaren Kanten der Tetraederelemente, die ein Testelement Al modellieren. Figur 5c ist eine vergrößerte Darstellung des Bereichs aus Figur 5b, in dem sich das verrundete Ende des rechten Schlitzes des Testelements Al befindet. Das Netz aus Tetraederelementen ist im Bereich des Schlitzendes, wo die größte Inhomogenität in der entstehenden Stromdichte erwartet wird, deutlich engmaschiger als im restlichen Bereich der Stapelung.

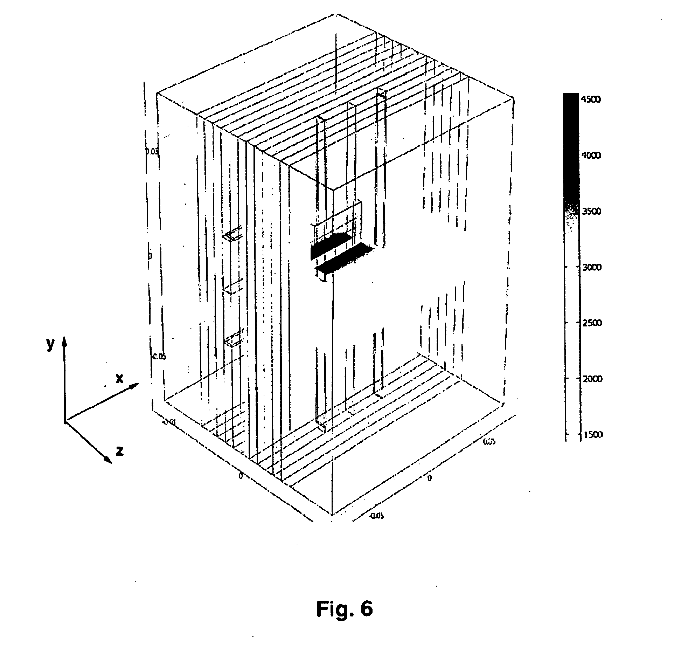

Für die Simulation wird $j_0$=2000 Am$^{-2}$ vorgegeben, was bei einer Querschnittsfläche von (150 mm)$^2$ einem Gesamtstrom von 45 A in z-Richtung entspricht. Figur 6 zeigt die Stromdichte $j_z$ entlang der z-Richtung innerhalb der Stapelung. Die Darstellung ist aufgeschnitten, um die wesentlichen Features der Stromdichteverteilung im Inneren der Stapelung sichtbar zu machen.

Es stellt sich eine nahezu homogene Stromdichte $j_z$ von etwas mehr als 2000 Am$^{-2}$ ein. Diesem nahezu homogenen Wert ist in der Darstellung von Figur 6 der größte Helligkeitswert zugeordnet. Je dunkler ein Bildpunkt dargestellt ist, desto größer ist die betragsmäßige Abweichung von dem nahezu homogenen Wert. Größere Abweichungen von dem nahezu homogenen Wert sind nur dort, wo der Defekt in der Platte $M_d$ unmittelbar die Stromdichte vermindert, sowie im Bereich der Schlitze der Platten Al zu erkennen.

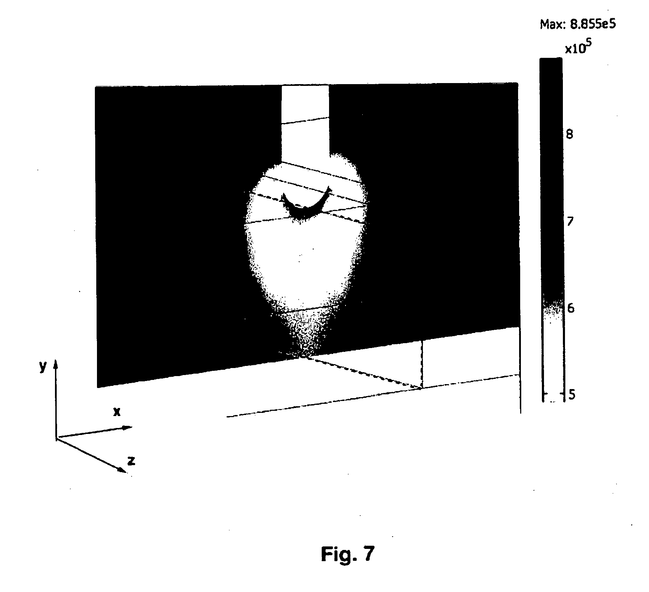

Figur 7 zeigt die Verteilung der Querstromdichte $j_\perp$ entlang der Messstrecke, die sich am unteren Ende des linken Schlitzes in Figur 5b befindet. Die Grauskala gilt nur für den sich an das Schlitzende anschließenden hell dargestellten Bereich (Halo) sowie für den hiervon eingeschlossenen dunklen Bereich unmittelbar am Schlitzende. Die restlichen Bereiche weisen deutlich geringere Stromdichten auf, die aus Kontrastgründen hier nicht mehr differenziert dargestellt sind. Die hier dargestellte Verteilung ist typisch für alle Schlitze: Die Querstromdichte weist im Bereich der Schlitzradien ausgeprägte Extrema auf. Die Werte von etwa 8*10$^5$ Am$^{-2}$ liegen dort um mehr als zwei Zehnerpotenzen über denjenigen der Längsstromdichte $j_z$.

Der Gesamtstrom, der in einer der Platten Al senkrecht durch den rechteckigen Querschnitt unterhalb eines Schlitzes fließt, wurde durch Integration von $j_\perp$ über diesen Querschnitt bestimmt. Das rechteckige Integrationsgebiet unterhalb des Schlitzes ist in Figur 7 gestrichelt umrandet. An jedem Schlitz werden Ströme von etwa 1 A erhalten (erste Platte: 1,016 A bzw. 1,013 A; zweite Platte: 1,006 A bzw. 1,013 A).

Diese Simulation bestätigt den qualitativen, mit der erfindungsgemäßen Vorrichtung erzielten Effekt, der bereits in den der oben beschriebenen analytischen Modellbetrachtung offenbar wurde. Der tief im Inneren der Stapelung verborgene Fehler der MEA mit Defekt $M_d$ führt zu einem hohen Messstrom, der auf Grund der Ausgestaltung der Messstrecke zum Teil an der Außenkante der Stapelung verläuft und außerdem senkrecht auf dem sehr viel größeren (45 A), in z-Richtung zwischen den beiden Platten St verlaufenden Nennstrom steht. Dadurch ist der Messstrom messtechnisch gut erfassbar, beispielsweise durch Messung des von ihm erzeugten Magnetfelds.

Die Simulation wurde mit COMSOL V3.4, 3.4.0.248, 2007/10/10, durchgeführt.

**Patentansprüche**

1. Vorrichtung, umfassend ein elektrisches Betriebselement oder eine Stapelung mindestens zweier elektrischer Betriebselemente oder einen Brennstoffzellenstapel als Stapelung mindestens zweier elektrischer Betriebselemente, **dadurch gekennzeichnet, dass** mindestens ein Testelement an mindestens ein Betriebselement angrenzt oder ein Teil dieses Betriebselements ist, wobei das Testelement mindestens zwei voneinander beabstandete elektrisch leitende Bereiche aufweist, welche über eine elektrisch leitende Messstrecke miteinander verbunden sind, und wobei das Testelement an diejenige Grenzfläche des Betriebselements angrenzt, durch die bei fehlerfreiem Betrieb des Betriebselements ein Nennstrom in das Betriebselement eintritt oder aus diesem austritt, oder ein Teil dieser Grenzfläche ist.

2. Vorrichtung nach Anspruch 1, **dadurch gekennzeichnet, dass** das Testelement zwischen den Betriebselementen einer Stapelung angeordnet ist.

3. Vorrichtung nach einem der Ansprüche 1 bis 2, **dadurch gekennzeichnet, dass** die Messstrecke derart ausgestaltet ist, dass ein gegebener Stromfluss zwischen den elektrisch leitenden Bereichen des Testelements in ihr eine höhere Stromdichte hervorruft als in den elektrisch leitenden Bereichen.

4. Vorrichtung nach einem der Ansprüche 1 bis 3; **dadurch gekennzeichnet, dass** mindestens ein elektrisch leitender Bereich des Testelements dort, wo er eine Grenzfläche mit einem Betriebselement bildet oder in dieses übergeht, in der Stromrichtung parallel zu der Grenzfläche beziehungsweise zu dem Übergang eine höhere elektrische Leitfähigkeit aufweist als der an ihn angrenzende Bereich des Betriebselements.

5. Vorrichtung nach einem der Ansprüche 1 bis 4, **dadurch gekennzeichnet, dass** sie Messmittel zur Bestimmung einer vom Strom durch die Messstrecke abhängigen Messgröße aufweist.

6. Vorrichtung nach einem der Ansprüche 1 bis 5, **dadurch gekennzeichnet, dass** mindestens eine direkte Sichtlinie von einem Punkt außerhalb des Betriebselements oder der Stapelung auf die Messstrecke besteht.

7. Vorrichtung nach einem der Ansprüche 1 bis 6, **dadurch gekennzeichnet, dass** mindestens ein Testelement eine längliche Beabstandung zwischen elektrisch leitenden Bereichen aufweist.

8. Vorrichtung nach einem der Ansprüche 1 bis 7, **dadurch gekennzeichnet, dass** sie mindestens zwei Testelemente aufweist, die jeweils an mindestens ein Betriebselement angrenzen oder in dieses übergehen, wobei das Betriebselement elektrisch zwischen die beiden Testelemente geschaltet ist oder die Testelemente aneinander angrenzen.

9. Vorrichtung nach Anspruch 8, **dadurch gekennzeichnet, dass** mindestens eine Beabstandung zwischen elektrisch leitenden Bereichen des ersten Testelements gegenüber mindestens einer Beabstandung zwischen elektrisch leitenden Bereichen des zweiten Testelements lateral versetzt angeordnet ist und/oder mindestens eine Beabstandung zwischen elektrisch leitenden Bereichen des ersten Testelements einen Winkel zwischen 70 und 110 Grad mit mindestens einer Beabstandung zwischen elektrisch leitenden Bereichen des zweiten Testelements einschließt.

10. Vorrichtung nach einem der Ansprüche 1 bis 9, **dadurch gekennzeichnet, dass** mindestens ein elektrisch leitender Bereich eines Testelements aus einem Material mit anisotroper elektrischer Leitfähigkeit besteht.

**11.** Verfahren zur Herstellung einer Vorrichtung nach einem der Ansprüche 1 bis 10 aus einem elektrischen Betriebselement oder einer Stapelung mindestens zweier elektrischer Betriebselemente oder einem Brennstoffzellenstapel als Stapelung mindestens zweier elektrischer Betriebselemente,
**dadurch gekennzeichnet, dass**
elektrisch leitende Bereiche in dem Betriebselement an der Grenzfläche des Betriebselements, durch die bei fehlerfreiem Betrieb des Betriebselements ein Nennstrom in das Betriebselement eintritt oder aus diesem austritt, voneinander getrennt werden, wobei eine Messstrecke zwischen den elektrisch leitenden Bereichen entweder bei der Trennung belassen oder nachträglich eingebracht wird.

**12.** Verfahren zum Betreiben einer Vorrichtung nach einem der Ansprüche 1 bis 10,
**dadurch gekennzeichnet, dass**
mindestens ein elektrisch leitender Bereich des Testelements logisch in Lösungsbereiche unterteilt wird
**und dass** bei der Auswertung, ob die Stromdichte in den Lösungsbereichen lokal geändert ist, mindestens eine Gleichung aufgestellt wird, in der der Beitrag eines oder mehrerer Lösungsbereiche zum Strom durch mindestens eine Messstrecke und der Gesamtstrom durch diese Messstrecke miteinander verknüpft werden.

**13.** Verfahren nach Anspruch 12,
**dadurch gekennzeichnet, dass**
mehrere Gleichungen aufgestellt werden, die sich in den Beiträgen der Lösungsbereiche und/oder in den Gesamtströmen, mit denen diese Beiträge verknüpft werden, voneinander unterscheiden.

**14.** Verfahren nach einem der Ansprüche 12 bis 13,
**dadurch gekennzeichnet, dass**
die Gleichung bzw. die Gleichungen unter Berücksichtigung von Nebenbedingungen gelöst werden, die die Art des im Betriebselement vermuteten Fehlers näher charakterisieren.

**Claims**

**1.** Device, comprising an electrical operating element or a stack of at least two electrical operating elements, or a fuel cell stack as a stack of at least two electrical operating elements,
**characterised in that**
at least one test element is contiguous with or forms part of this operating element, the test element having at least two electrically conductive areas which are at a distance from one another and are connected to one another via an electrically conductive measuring section, and the test element being contiguous with, or forming part of, the boundary surface of the operating element through which a nominal current enters or exits from the operating element in the case of defect-free operation of the operating element.

**2.** Device according to Claim 1,
**characterised in that**
the test element is arranged between the operating elements of a stack..

**3.** Device according to either of Claims 1 and 2,
**characterised in that**
the measuring section is configured in such a way that a given current flow between the electrically conductive areas of the test element produces a higher current density in the test section than in the electrically conductive areas.

**4.** Device according to any one of Claims 1 to 3,
**characterised in that**
at least one electrically conductive area of the test element, where it forms a boundary surface with an operating element or merges with it, has greater electrical conductivity in the current direction parallel to the boundary surface or to the merging area than the area of the operating element contiguous with it.

**5.** Device according to any one of Claims 1 to 4,
**characterised in that**
it includes measuring means for determining a measurable variable dependent on the current through the measuring section.

**6.** Device according to any one of Claims 1 to 5,
**characterised in that**
at least one direct line of sight exists from a point outside the operating element or the stack to the measuring section.

**7.** Device according to any one of Claims 1 to 6,
**characterised in that**
at least one test element has an elongated spacing between electrically conductive areas.

**8.** Device according to any one of Claims 1 to 7,
**characterised in that**
it includes at least two test elements, each of which is contiguous with or merges with at least one respective operating element, the operating element being connected electrically between the two test elements, or the test elements being contiguous with one another.

**9.** Device according to Claim 8,
**characterised in that**
at least one spacing between electrically conductive areas of the first test element is offset laterally with respect to at least one spacing between electrically conductive areas of the second test element, and/or at least one spacing between electrically conductive areas of the first test element includes an angle from 70 to 110° with at least one spacing between electrically conductive areas of the second test element.

**10.** Device according to any one of Claims 1 to 9,
**characterised in that**
at least one electrically conductive area of a test element consists of a material having anisotropic electrical conductivity.

**11.** Method for producing a device according to any one of Claims 1 to 10, comprising an electrical operating element or a stack of at least two electrical operating elements or a fuel cell stack as a stack of it at least two electrical operating elements,
**characterised in that**
electrically conductive areas in the operating element on the boundary surface of the operating element, through which a nominal current enters or exits from the operating element in the event of defect-free operation of the operating element, are separated from one another, a measuring section either being left in place between the electrically conductive areas during the separation or being introduced subsequently.

**12.** Method for operating a device according to any one of Claims 1 to 10,
**characterised in that**
at least one electrically conductive area of the test element is subdivided logically into resolution areas,
and **in that**, in evaluating whether the current density is changed locally in the resolution areas, at least one equation is constructed in which the contribution of one or more resolution areas to the current through at least one measuring section, and the overall flow through this measuring section, are linked to one another.

**13.** Method according to Claim 12,
**characterised in that**
a plurality of equations are constructed which differ from one another in the contributions of the resolution areas and/or in the overall flows with which these contributions are linked.

**14.** Method according to either of Claims 12 and 13,
**characterised in that**
the equation or equations are solved while taking account of secondary conditions which characterise more closely the type of the defect anticipated in the operating element.


**Revendications**

**1.** Dispositif, comprenant un élément de fonctionnement électrique ou un empilement d'au moins deux éléments de fonctionnement électriques ou un empilement de piles à combustible comme empilement,
**caractérisé en ce**

qu'au moins un élément de test jouxte au moins un élément de fonctionnement ou une partie dudit élément de fonctionnement, sachant que l'élément de test présente au moins deux zones électroconductrices espacées l'une de l'autre, lesquelles sont reliées entre elles par l'intermédiaire d'une ligne de mesure électroconductrice, et sachant que l'élément de test jouxte l'interface de l'élément de fonctionnement, par laquelle, en présence d'un fonctionnement de l'élément de fonctionnement ne présentant pas d'anomalie, un courant nominal entre dans l'élément de fonctionnement ou en sort, ou constitue une partie de ladite interface.

2. Dispositif selon la revendication 1,
**caractérisé en ce**
**que** l'élément de test est disposé entre les éléments de fonctionnement d'un empilement.

3. Dispositif selon l'une quelconque des revendications 1 à 2,
**caractérisé en ce**
**que** la ligne de mesure est configurée de telle manière qu'un flux de courant donné provoque, entre les zones électroconductrices de l'élément de test, en elle, une augmentation de la densité de courant comparé aux zones électroconductrices.

4. Dispositif selon l'une quelconque des revendications 1 à 3,
**caractérisé en ce**
qu'au moins une zone électroconductrice de l'élément de test présente là où elle forme une interface avec un élément de fonctionnement ou se confond avec cette dernière, dans la direction du courant, de manière parallèle à l'interface ou à la transition, une conductivité électrique plus élevée que la zone, qui la jouxte, de l'élément de fonctionnement.

5. Dispositif selon l'une quelconque des revendications 1 à 4,
**caractérisé en ce**
**que** ledit dispositif présente des moyens de mesure servant à déterminer une grandeur de mesure dépendant du courant à travers la ligne de mesure.

6. Dispositif selon l'une quelconque des revendications 1 à 5,
**caractérisé en ce**
qu'au moins une ligne de visibilité directe sur un point en dehors de l'élément de fonctionnement ou de l'empilement est présente sur la ligne de mesure.

7. Dispositif selon l'une quelconque des revendications 1 à 6,
**caractérisé en ce**
qu'au moins un élément de test présente un espacement allongé entre des zones électroconductrices.

8. Dispositif selon l'une quelconque des revendications 1 à 7,
**caractérisé en ce**
**que** ledit dispositif présente au moins deux éléments de test, qui respectivement jouxtent au moins un élément de fonctionnement ou se confondent avec ce dernier, sachant que l'élément de fonctionnement est branché de manière électrique entre les deux éléments de test ou que les éléments de test se jouxtent les uns aux autres.

9. Dispositif selon la revendication 8,
**caractérisé en ce**
qu'au moins un espacement entre des zones électroconductrices du premier élément de test est disposé de manière décalée latéralement par rapport à au moins un espacement entre des zones électroconductrices du deuxième élément de test,
et/ou en ce qu'au moins un espacement ente des zones électroconductrices du premier élément de test forme un angle compris entre 70 et 110 ° avec au moins un espacement entre des zones électroconductrices du deuxième élément de test.

10. Dispositif selon l'une quelconque des revendications 1 à 9,
**caractérisé en ce**
qu'au moins une zone électroconductrice d'un élément de test est constituée d'un matériau présentant une conductivité électrique anisotropique.

**11.** Procédé servant à fabriquer un dispositif selon l'une quelconque des revendications 1 à 10, à partir d'un élément de fonctionnement électrique ou d'un empilement d'au moins deux éléments de fonctionnement électriques ou d'un empilement de piles à combustible comme empilement d'au moins deux éléments de fonctionnement électriques, **caractérisé en ce que** des zones électroconductrices dans l'élément de fonctionnement, au niveau de l'interface de l'élément de fonctionnement, par laquelle, en présence d'un fonctionnement de l'élément de fonctionnement ne présentant aucune anomalie, un courant nominal entre dans l'élément de fonctionnement ou en sort, sont séparées les unes des autres, sachant qu'une ligne de mesure est pratiquée entre les zones électroconductrices soit lors de la séparation soit de manière ultérieure.

**12.** Procédé servant à faire fonctionner un dispositif selon l'une quelconque des revendications 1 à 10, **caractérisé en ce qu'**au moins une zone électroconductrice de l'élément de test est divisée en toute logique en zones de solutions, et en ce que lors de l'analyse consistant vérifier si la densité de courant est modifiée localement dans les zones de solutions, on pose au moins une équation, selon laquelle l'apport d'une ou de plusieurs zones de solutions au courant par au moins une ligne de mesure et le courant total par ladite ligne de mesure sont combinés entre eux.

**13.** Procédé selon la revendication 12, **caractérisé en ce qu'**on pose plusieurs équations, qui se distinguent les unes des autres dans les apports des zones de solutions et/ou dans les courants globaux, auxquels sont combinés lesdits apports.

**14.** Procédé selon l'une quelconque des revendications 12 à 13, **caractérisé en ce que** l'équation ou les équations sont résolues en tenant compte de conditions marginales, qui caractérisent de manière plus détaillée le type de l'anomalie supposée présentée par l'élément de fonctionnement.

Fig. 1a

**Fig. 1b**

**Fig. 1c**

**Fig. 1d**

Fig. 2a

**Fig. 2b**

EP 2 075 865 B1

**Fig. 2c**

23

Fig. 2d

**Fig. 3**

**Fig. 4**

**Fig. 5a**

**Fig. 5b**

**Fig. 5c**

**Fig. 6**

Max: 8.855e5

$\times10^5$

8

7

6

5

**Fig. 7**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20122043 U1

**In der Beschreibung aufgeführte Nicht-Patentliteratur**

- **R. KRESS ; L. KUHN ; R. POTTHAST.** Reconstruction of a current distribution from its magnetic field. *Inverse Problems,* 2002, vol. 18, 1127
- **D. J. L. BRETT et al.** Measurement of the current distribution along a single flow channel of a solid polymer fuel cell. *Electrochemistry Communications,* 2001, vol. 3, 628

- **J. STUMPER et al.** In-situ methods for the determination of current distributions in PEM fuel cells. *Electrochimica Acta,* 1998, vol. 43, 3773
- *COMSOL V3.4, 3.4.0.248,* 10. Oktober 2007